# FASCICULE DE BREVET EUROPEEN

(11) **EP 2 072 287 B1**
(45) Date de publication et mention de la délivrance du brevet: **23.02.2011**
(21) Numéro de dépôt: 08171831.4
(22) Date de dépôt: 16.12.2008
(51) Int. Cl.: B60C 11/12

(54) **Pneumatique, moule pour la vulcanisation de ce pneumatique, procédé de fabrication de ce moule et matrice de moule**
Reifen, Form für die Vulkanisierung dieses Reifens, Herstellungsverfahren dieser Form und Matrize der Form
Tyre, mould for vulcanisation of said tyre, method for manufacturing said mould and mould plate

(30) Priorité: 21.12.2007 FR 0760285
(43) Date de publication de la demande: 24.06.2009
(73) Titulaire: Société de Technologie Michelin, 63000 Clermont-Ferrand (FR); Michelin Recherche et Technique S.A., 1763 Granges-Paccot (CH)
(72) Inventeur: Delbet, Cédric, 63400 Chamalières (FR); Lauwers, Olivier, 63270 Yronde et Buron (FR); Alegre, Gérard, 63100 Clermont-Ferrand (FR); Merino-Lopez, José, 63200 Riom (FR); Desvignes, Jean-Claude, 63360 Gerzat (FR)
(74) Mandataire: Lasson, Cédric Y. M.

(56) Documents cités:
- WO-A-03/029031
- WO-A-2004/110789
- WO-A-2004/110790
- DE-A1- 10 309 759
- FR-A- 1 357 078
- JP-A- 2 310 108
- JP-A- 5 169 913
- US-A- 3 848 651

## Description

La présente invention concerne le domaine technique des pneumatiques.

Dans ce qui suit, on appelle axe d'un pneumatique son axe de révolution. Cet axe définit une direction axiale du moule en considérant le pneumatique dans le moule.

Un pneumatique comprend généralement une bande de roulement de révolution autour de l'axe du pneumatique. Cette bande de roulement comporte notamment des sculptures assurant une bonne adhérence du pneumatique.

L'usure de la bande de roulement provoque l'arasement des sculptures et donc une baisse des performances d'adhérence du pneumatique.

Dans le cas notamment d'un pneumatique pour véhicule de type poids lourd, il est connu de réaliser dans la masse de la gomme formant la bande de roulement des canaux destinés notamment à limiter la perte d'adhérence du pneumatique lors de l'usure de la bande de roulement. En effet, l'usure de la gomme de la bande de roulement provoque l'affleurement des canaux à la surface de cette bande de roulement. Les canaux affleurants forment des rainures susceptibles de remplacer au moins partiellement les sculptures initiales de la bande de roulement arasées par l'usure.

On connaît déjà dans l'état de la technique, notamment d'après le document WO-A-03/029031, un pneumatique comportant des canaux moulés dans la bande de roulement. Chaque canal est parallèle à l'axe de rotation du pneumatique.

Toutefois, lors de l'usure de la bande de roulement, l'affleurement de tous les canaux n'est pas simultané sur l'ensemble de la bande de roulement ce qui a pour effet de limiter la perte d'adhérence de façon hétérogène.

Le document JP-A-05-169913 décrit les caractéristiques techniques du préambule de la revendication 1.

L'invention a pour but de fournir un pneumatique dont l'adhérence est relativement homogène après l'usure de la bande de roulement.

A cet effet, l'invention est caractérisé en ce que le canal moulé s'étend suivant un trajet courbe et en ce que le canal moulé présente au moins deux courbures suivant deux rayons non coplanaires.

Un tel pneumatique permet d'obtenir une adhérence homogène après l'usure de la bande de roulement. En effet, le canal s'étendant suivant un trajet courbe, on s'arrange pour que cette courbe soit sensiblement homothétique de la courbure du sommet du pneumatique de sorte que l'affleurement du canal peut être rendu simultané sur toute la bande de roulement après l'usure de cette dernière. Ainsi, la perte d'adhérence est limitée de façon relativement homogène sur l'ensemble de la bande de roulement.

Selon d'autres caractéristiques optionnelles du pneumatique selon l'invention :
- Le trajet du canal moulé est sensiblement parallèle à une surface externe de la bande de roulement dans un plan de coupe radial du pneumatique. Un tel canal est, comme on l'a vu, particulièrement efficace dans le cas d'un pneumatique dont l'usure est sensiblement homogène sur l'ensemble de la bande de roulement.
- La bande de roulement comprend une pluralité de canaux espacés radialement et circonférentiellement.

Dans un mode de réalisation du pneumatique selon l'invention, le canal moulé s'étend axialement sur toute la largeur de la bande de roulement.

Dans un autre mode de réalisation du pneumatique selon l'invention, le canal moulé s'étend axialement sur une partie de la largeur de la bande de roulement.

Pour la compréhension de ce qui suit, on désignera sous le vocable de garniture la pièce ayant la forme définitive du moule destiné à donner sa forme au pneumatique. La garniture a donc la forme en négatif du pneumatique final. On désignera sous le vocable de matrice la pièce destinée à mouler la garniture du moule. La matrice a donc la forme en positif du pneumatique et la forme en négatif de la garniture.

L'invention a également pour objet un moule pour la vulcanisation d'un pneumatique, du type comprenant :
- un organe de moulage d'un canal moulé dans une bande de roulement du pneumatique et
- une garniture portant une surface de moulage d'une partie de la bande de roulement du pneumatique, la garniture comportant au moins un cordon de moulage d'un sillon de la bande de roulement,
   caractérisé en ce que le cordon comporte au moins un canal de guidage de l'organe de moulage, le canal de guidage s'étendant à travers le cordon, et en ce que le canal moulé présente au moins deux courbures suivant deux rayons non coplanaires.

Chaque canal de guidage permet de guider l'organe de moulage, notamment de sorte qu'il suive un trajet courbe.

Selon des caractéristiques optionnelles du moule selon l'invention :
- L'organe de moulage du canal est sensiblement filiforme et, après avoir été introduit dans le canal de guidage, s'étend sensiblement parallèlement à une surface de la garniture destinée au moulage d'une surface externe de la bande de roulement du pneumatique.
- Le cordon comporte au moins deux canaux de guidage espacés radialement.
- L'organe de moulage est sensiblement filiforme et, après avoir été introduit dans le canal de guidage, présente au moins deux courbures suivant deux rayons non coplanaires.

Avantageusement, au moins une extrémité du canal de guidage est délimitée par un bord interne évasé, de préférence dépourvu d'arête.

L'introduction de l'organe de moulage dans le canal de guidage est ainsi facilitée. En effet, le bord interne étant évasé, l'organe de moulage est guidé vers l'intérieur du canal de guidage.

Optionnellement, le canal de guidage est formé par un insert agencé dans le cordon.

L'utilisation d'un insert permet un calibrage précis du canal de guidage par rapport à l'organe de moulage. Un tel calibrage serait plus difficile à obtenir en ménageant le canal de guidage directement dans le cordon, par exemple par perçage. Ainsi, le calibrage précis permet d'éviter, lors de la vulcanisation du pneumatique, le passage de la gomme entre le canal de guidage et l'organe de moulage, ce qui entraînerait la formation d'un manchon de gomme inesthétique. En choisissant judicieusement le matériau de l'insert, on peut réduire les usures provoquées par les mouvements de l'organe de moulage à chaque cycle de cuisson et on retarde d'autant l'apparition de jeux susceptibles de provoquer la formation des manchons de gomme.

On observera à ce stade qu'il serait tout à fait possible de réaliser un moule comportant des canaux de guidage réalisés directement dans les cordons ou dans des lamelles du moule. Toutefois, il convient de remarquer, comme cela vient d'être dit, que l'usure des canaux de guidage serait alors rapide en raison de la nature des matériaux généralement employés pour fabriquer la garniture du moule.

Selon une caractéristique optionnelle du moule selon l'invention, l'organe de moulage du canal moulé est revêtu d'un revêtement anti-adhérent.

Le revêtement anti-adhérent permet de limiter les efforts axiaux exercés sur le moule lors du démoulage du pneumatique vulcanisé. En effet, l'organe de moulage doit être déplacé axialement pour permettre le démoulage du pneumatique vulcanisé. Le revêtement anti-adhérent permet de réduire les frottements entre le canal moulé dans la gomme et l'organe de moulage qui s'y déplace.

Le revêtement anti-adhérent permet également d'uniformiser la section externe de l'organe de moulage. En effet, l'organe de moulage nu présente généralement une section externe irrégulière, si bien que, lors du moulage du pneumatique, de la gomme pourrait s'écouler entre le canal de guidage et l'organe de moulage nu formant ainsi un manchon de gomme inesthétique. La formation de ce manchon peut être évitée grâce au revêtement.

De préférence, l'organe de moulage du canal moulé est revêtu d'un revêtement comprenant un composé du type polyéther-éther-cétone.

De plus, un revêtement comprenant un composé du type polyéther-éther-cétone présente des propriétés d'inertie aux températures élevées empêchant sa dégradation et la pollution de la gomme du pneumatique durant la vulcanisation du pneumatique.

Selon une autre caractéristique optionnelle du moule selon l'invention, la garniture comportant au moins des premier et deuxième cordons espacés axialement, l'organe de moulage s'étend à travers des premier et deuxième canaux de guidage successifs, agencés respectivement dans les premier et deuxième cordons, communs à l'organe de moulage.

Avantageusement, en considérant le trajet de l'organe de moulage à travers les premier et deuxième canaux de guidage, la sortie du premier canal de guidage est orientée de façon à diriger l'organe de moulage vers l'entrée du deuxième canal de guidage.

Ainsi, la mise en place de l'organe de moulage dans les canaux de guidage est simplifiée. En effet, lors de l'introduction de l'organe de moulage dans les premier et deuxième canaux de guidage, l'organe de moulage peut pénétrer dans le deuxième canal sans qu'un utilisateur n'ait besoin d'intervenir pour guider l'organe entre les premier et deuxième canaux de guidage.

De façon optionnelle, la longueur du trajet entre les premier et deuxième canaux de guidage successifs est d'au plus 40 mm.

Cette caractéristique permet d'éviter un fléchissement de l'organe de moulage sous l'effet de la pression de la gomme lors du moulage du pneumatique. En outre, en réduisant la distance entre les premier et deuxième canaux de guidage successifs, la courbure imposée à l'organe de moulage peut être augmentée.

L'invention a encore pour objet un procédé de fabrication d'une garniture dite finale portant une surface de moulage d'une partie d'une bande de roulement d'un pneumatique, la garniture finale comportant au moins un cordon de moulage d'un sillon de la bande de roulement, procédé du type dans lequel on moule la garniture finale sur une matrice dite finale, caractérisé en ce que la matrice finale comprend au moins un insert, dit final, destiné à former, dans le cordon de la garniture finale, un logement pour un organe formant un canal de guidage d'un organe de moulage d'un canal moulé dans la bande de roulement, et en ce que le canal moulé présente au moins deux courbures suivant deux rayons non coplanaires.

Selon des caractéristiques optionnelles du procédé selon l'invention :
- L'insert final est formé par l'organe formant canal de guidage.
- On réalise la matrice finale dans un matériau inerte vis-à-vis du matériau en fusion de la garniture finale.
- On réalise la matrice finale dans un matériau comprenant du sable et/ou du plâtre. L'utilisation d'un matériau comprenant du sable ou du plâtre permet de démouler facilement la garniture finale. En effet, un tel matériau est facilement fragmentable et est, de plus, peu coûteux et recyclable.

De façon optionnelle, préalablement au moulage de la garniture finale sur la matrice finale :
- on moule une garniture intermédiaire, de forme sensiblement similaire à la garniture finale, sur une matrice intermédiaire, de forme sensiblement similaire à la matrice finale,
- la matrice intermédiaire comprenant au moins un insert intermédiaire destiné à former, dans un cordon de la garniture intermédiaire, un logement pour l'insert final, et
- on moule la matrice finale sur la garniture intermédiaire.

Avantageusement, on moule la garniture intermédiaire dans un matériau à mémoire de forme, de préférence élastomérique, comprenant par exemple du silicone.

Le matériau à mémoire de forme permet de découper facilement la garniture intermédiaire. En outre, la garniture intermédiaire ainsi moulée est réutilisable.

Selon une caractéristique optionnelle du procédé selon l'invention, la matrice intermédiaire comprend :
- au moins un bloc amovible comprenant deux parties séparables l'une de l'autre comportant chacune un logement de positionnement de l'insert intermédiaire, et
- une embase comportant au moins un logement de positionnement du bloc amovible.

Le bloc étant amovible, la garniture intermédiaire peut être séparée de l'embase. De plus, le bloc amovible comprenant deux parties séparables l'une de l'autre, le bloc peut être séparé de l'insert intermédiaire moulé dans le cordon de la garniture intermédiaire sans avoir à fragmenter la matrice intermédiaire qui est donc réutilisable.

En outre, le logement de l'insert intermédiaire, permettant de positionner axialement l'insert intermédiaire dans le cordon de la matrice intermédiaire, peut être ménagé avec précision dans chacune des parties séparables, indépendamment de la fabrication de l'embase.

Avantageusement, on réalise la matrice intermédiaire dans une matière plastique, de préférence par moulage ou par usinage.

A titre d'exemple, la matière plastique permet d'usiner facilement et précisément l'embase, notamment le logement de positionnement du bloc amovible. En outre, la matière plastique est généralement compatible avec le matériau de la garniture intermédiaire.

Selon une caractéristique optionnelle du procédé selon l'invention, on réalise au moins une découpe sensiblement transversale dans un cordon de la garniture intermédiaire, de préférence une découpe gauche, cette découpe aboutissant dans un logement d'insert intermédiaire de façon à autoriser le retrait de l'insert final par déplacement à travers la découpe.

La découpe du cordon intermédiaire et l'utilisation du matériau à mémoire de forme permettent de séparer la garniture intermédiaire de la matrice finale sans avoir à fragmenter cette garniture intermédiaire ce qui risquerait d'endommager la matrice finale.

Avantageusement, après le moulage de la garniture intermédiaire sur la matrice intermédiaire, et avant le moulage de la matrice finale sur la garniture intermédiaire, on remplace l'insert intermédiaire par l'insert final.

La découpe gauche du cordon de la matrice intermédiaire permet, après remplacement de l'insert intermédiaire par l'insert final, un repositionnement précis des parties découpées du cordon de la garniture intermédiaire l'une par rapport à l'autre.

En remplaçant l'insert intermédiaire par l'insert final, on simplifie le procédé de fabrication du moule. En effet, on peut utiliser des inserts intermédiaires présentant une longueur standard et utiliser des inserts finaux présentant des longueurs différentes adaptées en fonction de leurs emplacements dans le cordon de la matrice finale.

Optionnellement, l'insert intermédiaire et/ou l'insert final comporte un collet de maintien axial par rapport au cordon de la garniture intermédiaire et/ou finale.

L'insert final présente généralement une dimension axiale suffisante pour faire saillie de part et d'autre du cordon qu'il traverse. Le collet permet, lors du moulage du pneumatique, de maintenir l'insert final dans une position précise par rapport au cordon pour éviter un décalage axial intempestif de l'insert final par rapport au cordon susceptible d'entraîner la formation, dans la gomme moulée, d'une dépouille inesthétique d'un côté du cordon et d'une contre dépouille exagérée de l'autre côté du cordon.

De préférence, l'insert intermédiaire et l'insert final comportent chacun un collet. En effet, l'insert intermédiaire étant positionné axialement dans le cordon de la garniture intermédiaire au moyen du logement de positionnement ménagé dans le bloc mobile, le collet permet de positionner à l'identique l'insert final dans le cordon de la garniture finale.

L'invention a enfin pour objet une matrice de moulage d'une garniture portant au moins une surface de moulage d'une partie d'une bande de roulement d'un pneumatique, caractérisée en ce que la matrice comprend :
- au moins un bloc amovible comprenant deux parties séparables l'une de l'autre comportant chacune un logement de positionnement d'un insert destiné à former, dans le cordon de la garniture un logement pour un organe formant un canal de guidage d'un organe de moulage d'un canal moulé dans la bande de roulement, et
- une embase comportant au moins un logement de positionnement du bloc amovible, et en ce que le canal moulé présente au moins deux courbures suivant deux rayons non coplanaires.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe radial, d'un pneumatique selon un premier mode de réalisation de l'invention ;
- la figure 2 est une vue, dans un plan de coupe radial, d'une garniture d'un moule comprenant des organes de moulage et permettant de fabriquer le pneumatique de la figure 1;
- la figure 3 est une vue, dans un plan de coupe radial, d'une matrice intermédiaire de la garniture de la figure 2, comprenant une embase et des blocs mobiles;
- la figure 4 est une vue, dans un plan de coupe radial, de la matrice intermédiaire de la figure 3 sur laquelle est moulée une garniture intermédiaire ;
- la figure 5 est une vue, dans un plan de coupe radial, de la garniture intermédiaire de la figure 4 et des blocs mobiles après retrait de l'embase;
- la figure 6 est une vue agrandie de la figure 5 montrant des blocs mobiles de la garniture intermédiaire dans une position de séparation par rapport à la garniture intermédiaire;
- la figure 7 est une vue en perspective d'un cordon de la garniture intermédiaire ;
- la figure 8 est une vue en coupe axiale d'un insert final formant un canal de guidage de l'organe de moulage ;
- la figure 9 est une vue, dans un plan de coupe radial, de la garniture intermédiaire des figures 4 à 6, sur laquelle est moulée une matrice finale.
- la figure 10 est une vue, dans un plan de coupe radial, de la matrice finale après retrait de la garniture intermédiaire ;
- la figure 11 est une vue, dans un plan de coupe radial, de la matrice finale surmoulée d'une garniture finale ;
- la figure 12 est une vue de dessus d'une garniture d'un moule selon un deuxième mode de réalisation de l'invention illustrant les organes de moulage dans les canaux de guidage ;
- la figure 13 est une vue de dessus d'une garniture d'un moule selon un troisième mode de réalisation de l'invention illustrant les organes de moulage dans les canaux de guidage.

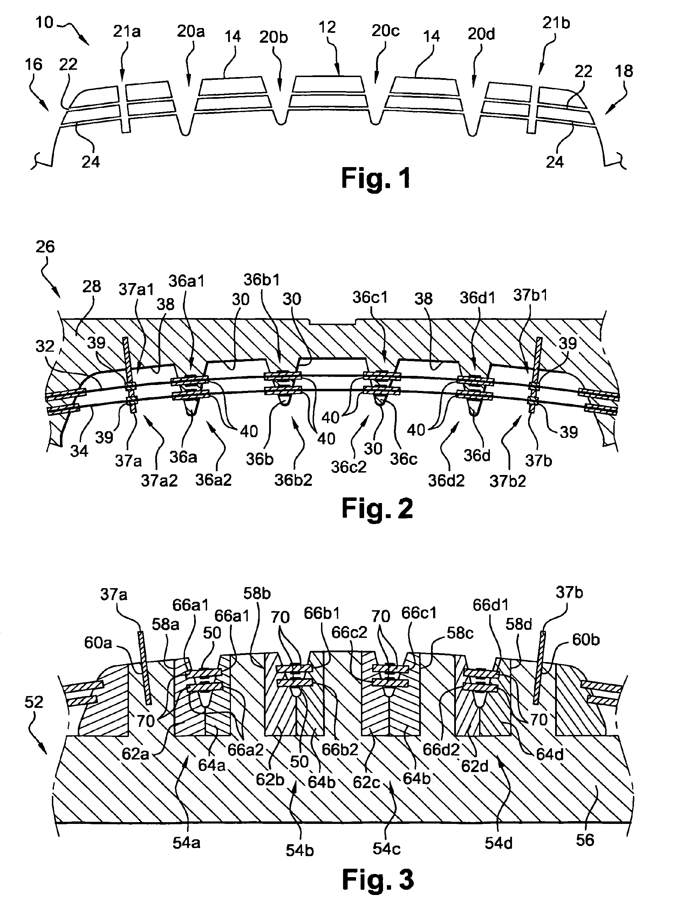

On a représenté sur la figure 1 un pneumatique selon un premier mode de réalisation de l'invention désigné par la référence générale 10.

Le pneumatique 10 comprend une bande de roulement 12. La bande de roulement 12 comporte une surface externe 14, destinée à être au contact de la chaussée, et deux épaules 16, 18. De plus, la bande de roulement 12 comporte des sillons 20a-d et des incisions 21 a-b ménagés dans la gomme de la bande de roulement 12. Les sillons 20a-d et les incisions 21 a-b sont espacés axialement les uns des autres et répartis sur toute la dimension axiale de la bande de roulement 12.

Deux canaux 22, 24 sont ménagés dans la bande de roulement 12. Les deux canaux 22, 24 sont espacés radialement. En outre, chaque canal 22, 24 s'étend sur toute la dimension axiale de la bande de roulement 12, de l'épaule 16 à l'épaule 18, et est interrompu par les sillons 20a-d et les incisions 21 a-b. Pour les besoins de la présente description les canaux sont au nombre de deux dans la direction radiale. Toutefois il est possible, sans se départir des enseignements de l'invention, de prévoir un ou plusieurs canaux espacés radialement. De même, les canaux peuvent également être espacés selon une distribution déterminée circonférentiellement.

De plus, dans le plan radial du pneumatique représenté à la figure 1, chaque canal 22, 24 s'étend suivant un trajet courbe sensiblement parallèle à la surface externe 14. On a représenté sur la figure 2 un moule 26 permettant de fabriquer le pneumatique 10 de la figure 1.

Le moule 26 comprend une garniture 28 portant une surface 30 de moulage d'une partie de la bande de roulement 12 du pneumatique 10. Le moule 26 comprend également des organes 32, 34 de moulage respectivement des canaux 22, 24.

La garniture 28 comporte plusieurs cordons 36a-d espacés radialement et destinés au moulage des sillons 20a-d. La garniture 28 comprend également deux lamelles 37a-b destinées au moulage des incisions 21a-b. La surface 30 comprend une surface 38 de moulage de la surface externe 14 du pneumatique 10.

Les cordons 36a-d et lamelles 37a-b comportent respectivement, d'une part, des canaux successifs 36a1, 36b1, 36c1, 36d1, 37a1, 37b1 de guidage de l'organe 32 et, d'autre part, des canaux successifs 36a2, 36b2, 36c2, 36d2, 37a2, 37b2 de guidage de l'organe 34. Les canaux de guidage s'étendent chacun à travers un cordon ou une lamelle. Les canaux de guidage s'étendant à travers un même cordon ou une même lamelle sont espacés radialement. En outre, la longueur du trajet entre deux canaux successifs est d'au plus 40 mm.

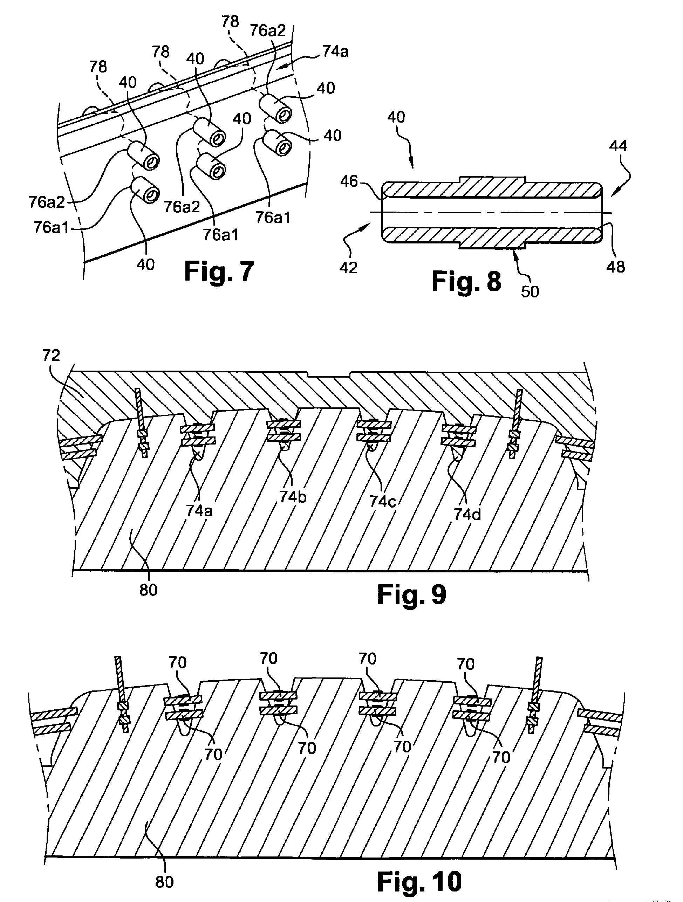

Chaque canal de guidage 37a1-a2, 37b1-b2 est formé par une bague cylindrique 39. Chaque canal de guidage 36a1-a2, 36b1-b2, 36c1-c2, 36d1-d2 est formé par un insert 40, dit final, représenté plus en détail à la figure 8. Chaque insert 40 comporte deux extrémités 42, 44 délimitées respectivement par des bords internes 46, 48. La section de l'insert peut être circulaire, comme cela est suggéré sur la figure 8, ou de forme quelconque selon la forme que l'on désire donner aux canaux. Chaque bord interne 46, 48 est évasé et dépourvu d'arête. Chaque insert 40 comporte également un collet 50 de maintien axial par rapport au cordon 36a-d correspondant.

Chaque organe de moulage 32, 34 est sensiblement filiforme et a la forme générale d'une aiguille flexible. L'organe 32 est commun aux canaux successifs 36a1, 36b1, 36c1, 36d1 et s'étend sensiblement parallèlement à la surface 30 à travers ces canaux 36a1, 36b1, 36c1, 36d1. De façon analogue, l'organe 34 est commun aux canaux 36a2, 36b2, 36c2, 36d2 et s'étend sensiblement parallèlement à la surface 30 à travers ces canaux 36a2, 36b2, 36c2, 36d2.

En considérant le trajet de l'organe 32 à travers les canaux 36a1 à 36d1, les sorties des canaux 36a1, 36b1, 36c1 sont orientées de façon à diriger l'organe 32 vers les entrées respectivement des canaux 36b1, 36c1, 36d1. Les entrées et sorties des canaux 36a2 à 36d2 sont agencées *mutatis mutandis* comme celles des canaux 36a1 à 36d1.

En outre, chaque organe de moulage 32, 34 est revêtu d'un revêtement antiadhérent de manière à faciliter l'extraction dudit organe de moulage de la bande de roulement avant l'extraction du pneumatique lui-même. En l'espèce, un revêtement comprenant un composé de type polyéther-éther cétone s'est avéré efficace.

La fabrication du moule 26 est possible en mettant en oeuvre un procédé selon l'invention dont on décrira ci-dessous les principales étapes en référence aux figures 3 à 10.

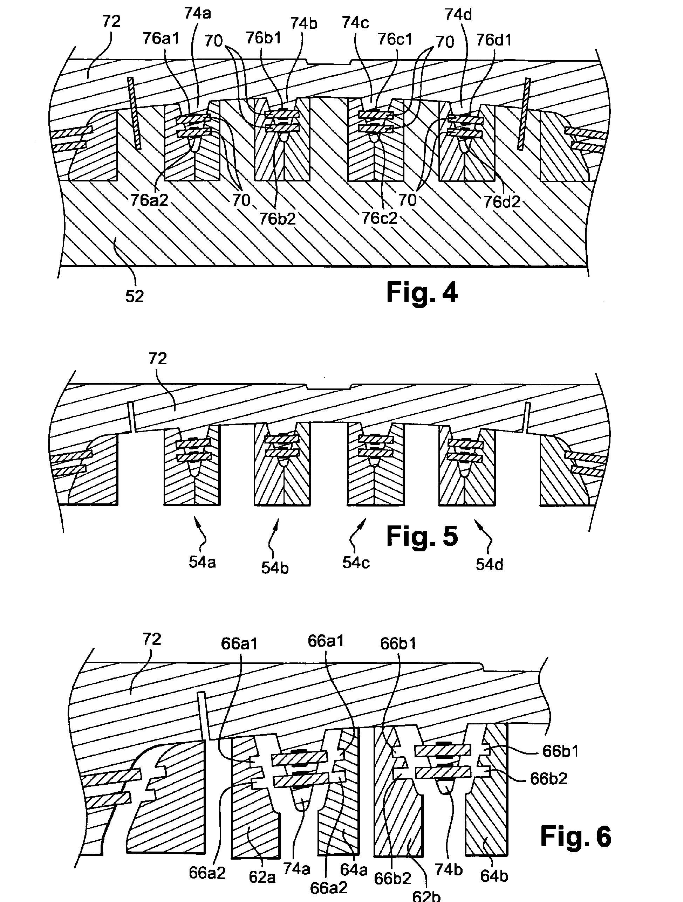

On a représenté sur les figures 3 et 4 une matrice intermédiaire 52. Cette matrice intermédiaire 52 comprend des blocs mobiles 54a-d et une embase 56. L'embase 56 comporte des logements 58a-d de positionnement des blocs mobiles 54a-d. L'embase 56 comprend enfin des logements 60a-b de positionnement respectivement des lamelles 37a-b.

Chaque bloc mobile 54a-d comprend deux parties 62a-d, 64a-d séparables l'une de l'autre. Le bloc 54a comprend deux logements 66a1, 66a2 de positionnement de deux inserts intermédiaires 70. En l'espèce, chaque partie 62a, 64a comporte une portion de chaque logement 66a1, 66a2. Chaque bloc 54b-d comprend deux logements dont les références se déduisent *mutatis mutandis* de celles du bloc 54a. Dans l'exemple illustré, tous les inserts intermédiaires 70 sont identiques.

Chaque insert intermédiaire 70 comprend, comme l'insert final 40, un collet 50 de maintien axial. Chaque insert intermédiaire 70 présente une forme externe similaire à celle de l'insert final 40. Par contre, un insert intermédiaire 70 est plein alors qu'un insert final 40 est tubulaire.

On réalise la matrice intermédiaire 52 comprenant l'embase 56 et les blocs mobiles 54a-d dans une matière plastique tendre, par moulage ou de préférence par usinage.

Puis, comme représenté à la figure 4, on moule une garniture intermédiaire 72 sur la matrice intermédiaire 52. La garniture intermédiaire 72 a une forme sensiblement similaire à celle de la garniture finale 28 représentée à la figure 2.

Dans l'exemple représenté, on moule la garniture intermédiaire 72 dans un matériau à mémoire de forme. En l'espèce, le matériau couramment utilisé est de type élastomérique et peut comprendre du silicone.

Chaque insert intermédiaire 70 forme dans chaque cordon 74a-d de la garniture intermédiaire 72 un logement 76a1-a2, 76b1-b2, 76c1-c2, 76d1-d2 respectivement pour un insert final 40 correspondant.

Ensuite, comme représenté à la figure 5, on retire alors la garniture intermédiaire 72 de l'embase 56.

Puis, comme représenté à la figure 6, on sépare les deux parties 62a-d, 64a-d de façon à libérer chaque insert intermédiaire 70 de son logement 66 correspondant.

Ensuite, on réalise des découpes 78 gauches sensiblement transversales dans chaque cordon 74a-d de la garniture intermédiaire 72.

Après les étapes ci-dessus, on remplace chaque insert intermédiaire 70 par l'insert final 40 correspondant.

Ainsi, comme représenté à la figure 7, où seul est montré le cordon intermédiaire 74a, on voit que la découpe 78 aboutit dans les logements 76a1 et 76a2 des inserts finaux 40 de façon à autoriser le retrait de ces inserts 40 par déplacement à travers la découpe 78.

En variante, on peut remplacer les inserts intermédiaires 40 par les inserts finaux 70 après découpage des cordons 74a-d.

Puis, on replace les lamelles 37a-b munies des bagues de guidages 39, dans la garniture intermédiaire 72.

Ensuite, comme représenté sur la figure 9, on moule la matrice finale 80 sur la garniture intermédiaire 72. Afin d'éviter la pénétration du matériau de la matrice finale 80 dans les canaux de guidage formés par les inserts 40, on bouche temporairement ces canaux de guidage. La matrice finale 80 comprend les inserts finaux 40.

En référence à la figure 10, la matrice finale 80 a une forme sensiblement similaire à la matrice intermédiaire 52. On réalise la matrice finale 80 dans un matériau inerte vis-à-vis du matériau en fusion de la garniture finale 28. Ce matériau comprend de préférence du sable ou/et du plâtre.

Puis, on retire la garniture intermédiaire 72 de la matrice finale 80 comme illustré à la figure 10. Les découpes 78 permettent aux cordons 74a-d de la garniture intermédiaire 72 de se séparer des inserts 40. La garniture intermédiaire 72 est alors prête pour une réutilisation ultérieure en vue du moulage d'une nouvelle matrice finale. Il conviendra alors de réintroduire des inserts 40 dans les logements 76a1-a2, 76b1-b2, 76c1-c2, 76d1-d2.

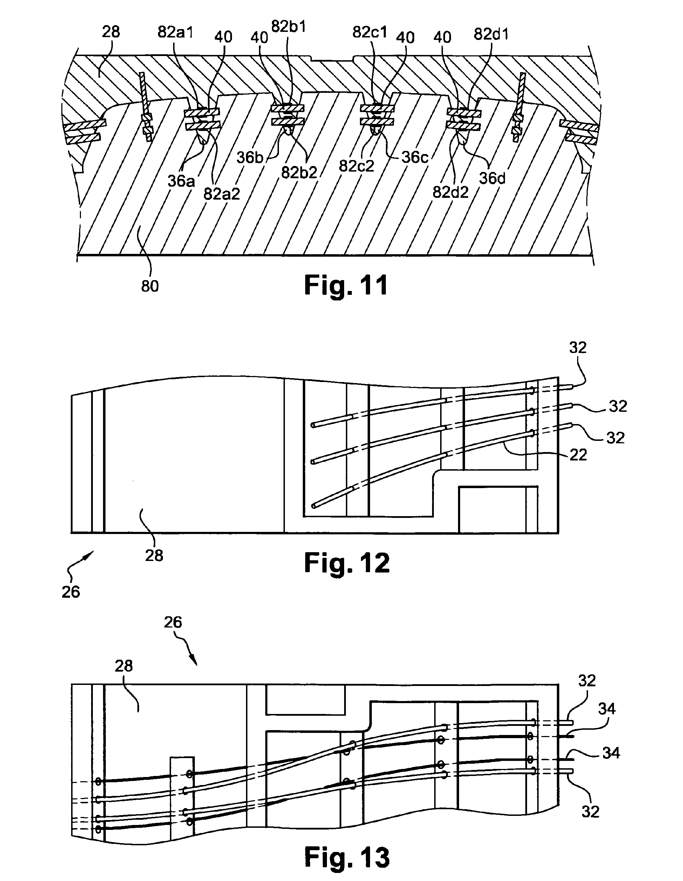

Enfin, comme représenté à la figure 11, on moule la garniture finale 28 sur la matrice finale 80. La garniture finale 28 est moulée dans un métal comprenant, en l'espèce, de l'aluminium.

Chaque insert 40 forme, dans chaque cordon 36a-d de la garniture finale 28, un logement 82a1-a2, 82b1-b2, 82c1-c2, 82d1-d2 pour un organe formant le canal de guidage correspondant 36a1-a2, 36b1-b2, 36c1-c2, 36d1-d2. En l'espèce, les organes formant les canaux de guidage 36a1-a2, 36b1-b2, 36c1-c2, 36d1-d2 sont les inserts finaux 40.

On fragmente enfin la matrice finale 80 de façon à libérer la garniture finale 28, et on débouche les inserts 40.

On a représenté sur la figure 12 une garniture 28 d'un moule 26 selon un deuxième mode de réalisation de l'invention. Sur cette figure 12, les éléments analogues à ceux des figures précédentes sont désignés par des références identiques.

Pour des raisons de clarté, on a représenté que certains canaux de guidage 36ad.

A la différence du moule selon le premier mode de réalisation, chaque organe de moulage 32 présente au moins deux courbures suivant deux rayons non coplanaires. Ainsi, chaque organe 32 s'étend suivant un trajet courbe en projection dans un plan radial et suivant un trajet courbe en projection à plat de la garniture 28. En outre, chaque organe 32 s'étend sur une partie seulement de la dimension axiale de la garniture 28.

Afin de faciliter l'introduction des organes de moulage 32 dans le moule 26, on préforme chaque organe de moulage 32.

On a représenté sur la figure 13 une garniture 28 d'un moule 26 selon un troisième mode de réalisation de l'invention. Sur cette figure 13, les éléments analogues à ceux des figures précédentes sont désignés par des références identiques.

A la différence du premier mode de réalisation, chaque organe de moulage 32, 34 présente deux courbures suivant deux rayons non coplanaires. En outre, en projection à plat de la garniture 28, chaque organe 32, 34 présente un point d'inflexion.

A la lecture de ce qui précède, il est tout à fait possible de faire subir à l'organe de moulage flexible un trajet présentant une ou plusieurs variations de courbure selon la position des pains de gomme disposés sur la bande de roulement. Cet avantage permet d'élargir les possibilités de conception du pneumatique en réduisant les limites imposées par les procédés selon l'art antérieur.

## Revendications

1. Pneumatique (10) comprenant une bande de roulement (12) dans laquelle
est ménagé au moins un canal moulé (22, 24), le canal moulé (22, 24) étant interrompu par au moins un sillon (20a-d) de la bande de roulement **caractérisé en ce que** le canal moulé (22, 24) s'étend suivant un trajet courbe et **en ce que** le canal moulé présente au moins deux courbures suivant deux rayons non coplanaires.

2. Moule (26) pour la vulcanisation d'un pneumatique (10), du type comprenant :
- un organe de moulage (32, 34) d'un canal moulé (22, 24) dans une bande de roulement (12) du pneumatique et
- une garniture (28) portant une surface de moulage (30) d'une partie de la bande de roulement du pneumatique, la garniture comportant au moins un cordon (36a-d) de moulage d'un sillon (20a-d) de la bande de roulement (12),
**caractérisé en ce que** le cordon (36a-d) comporte au moins un canal (36a1-a2, 36b1-b2, 36c1-c2, 36d1-d2) de guidage de l'organe de moulage (32, 34), le canal de guidage s'étendant à travers le cordon (36a-d), et **en ce que** le canal moulé présente au moins deux courbures suivants deux rayons non coplanaires.

3. Moule (26) selon la revendication 2, dans lequel l'organe de moulage (32, 34) est sensiblement filiforme et, après avoir été introduit dans le canal de guidage (36a1-a2, 36b1-b2, 36c1-c2, 36d1-d2), s'étend sensiblement parallèlement à une surface (38) de la garniture destinée au moulage d'une surface externe (14) de la bande de roulement (12) du pneumatique (10).

4. Moule (26) selon la revendication 2 ou 3, dans lequel l'organe de moulage (32, 34) est sensiblement filiforme et, après avoir été introduit dans le canal de guidage (36a1-a2, 36b1-b2, 36c1-c2, 36d1-d2), présente au moins deux courbures suivant deux rayons non coplanaires.

5. Moule (26) selon l'une quelconque des revendications 2 à 4, dans lequel au moins une extrémité (42, 44) du canal de guidage est délimitée par un bord interne (46, 48) évasé, de préférence dépourvu d'arête.

6. Moule (26) selon l'une quelconque des revendications 2 à 5, dans lequel le canal de guidage (36a1-a2, 36b1-b2, 36c1-c2, 36d1-d2) est formé par un insert (70) agencé dans le cordon (36a-d).

7. Moule (26) selon l'une quelconque des revendications 2 à 6, dans lequel, la garniture (28) comportant au moins des premier et deuxième cordons (36a-d) espacés axialement, l'organe de moulage s'étend à travers des premier et deuxième canaux (36a1-a2, 36b1-b2, 36c1-c2, 36d1-d2) de guidage successifs, agencés respectivement dans les premier et deuxième cordons (36a-d), communs à l'organe de moulage (32, 34).

8. Procédé de fabrication d'une garniture (28) dite finale portant une surface de moulage (30) d'une partie d'une bande de roulement (12) d'un pneumatique, la garniture finale (28) comportant au moins un cordon de moulage (36a-d) d'un sillon (20a-d) de la bande de roulement, procédé du type dans lequel on moule la garniture finale (28) sur une matrice dite finale (80), **caractérisé en ce que** la matrice finale (80) comprend au moins un insert (40), dit final, destiné à former, dans le cordon (20a-d) de la garniture finale (28), un logement (82a1-a2, 82b1-b2, 82c1-c2, 82d1-d2) pour un organe (40) formant un canal de guidage (36a1-a2, 36b1-b2, 36c1-c2, 36d1-d2) d'un organe de moulage (32, 34) d'un canal moulé (22, 24) dans la bande de roulement, et **en ce que** le canal moulé présente au moins deux courbures suivants deux rayons non coplanaires.

9. Procédé selon la revendication 8, dans lequel l'insert final (40) est formé par l'organe formant canal de guidage (36a1-a2, 36b1-b2, 36c1-c2, 36d1-d2).

10. Procédé selon la revendication 8 ou 9, dans lequel, préalablement au moulage de la garniture finale (28) sur la matrice finale (80):
- on moule une garniture intermédiaire (72), de forme sensiblement similaire à la garniture finale (28), sur une matrice intermédiaire (52), de forme sensiblement similaire à la matrice finale (80),
- la matrice intermédiaire (52) comprenant au moins un insert intermédiaire (70) destiné à former, dans un cordon (74a-d) de la garniture intermédiaire (72), un logement (76a1-a2, 76b1-b2, 76c1-c2, 76d1-d2) pour l'insert final (40), et
- on moule la matrice finale sur la garniture intermédiaire.

11. Procédé selon la revendication 10, dans lequel la matrice intermédiaire (52) comprend :
- au moins un bloc amovible (54a-d) comprenant deux parties séparables (62a-d, 64a-d) l'une de l'autre comportant chacune un logement (66a1-a2, 66b1-b2, 66c1-c2, 66d1-d2) de positionnement de l'insert intermédiaire (70), et
- une embase (56) comportant au moins un logement (58a-d) de positionnement du bloc amovible (54a-d).

12. Procédé selon la revendication 10 ou 11, dans lequel on réalise au moins une découpe (78) sensiblement transversale dans un cordon (74a-d) de la garniture intermédiaire (72), de préférence une découpe gauche, cette découpe aboutissant dans un logement (76a1-a2, 76b1-b2, 76c1-c2, 76d1-d2) d'insert intermédiaire de façon à autoriser le retrait de l'insert final (70) par déplacement à travers la découpe.

13. Procédé selon l'une quelconque des revendications 10 à 12, dans lequel :
- après le moulage de la garniture intermédiaire (72) sur la matrice intermédiaire (52), et
- avant le moulage de la matrice finale (80) sur la garniture intermédiaire (72), on remplace l'insert intermédiaire (70) par l'insert final (40).

14. Matrice (52) de moulage d'une garniture (28) portant au moins une surface de moulage (30) d'une partie d'une bande de roulement (12) d'un pneumatique (10), **caractérisée en ce que** la matrice comprend :
- au moins un bloc amovible (54a-d) comprenant deux parties (62a-d, 64a-d) séparables l'une de l'autre comportant chacune un logement (66a1-a2, 66b1-b2, 66c1-c2, 66d1-d2) de positionnement d'un insert destiné à former, dans le cordon de la garniture, un logement pour un organe formant un canal de guidage d'un organe de moulage d'un canal moulé dans la bande de roulement, et
- une embase (56) comportant au moins un logement de positionnement du bloc amovible (54a-d), et **en ce que** le canal moulé présente au moins deux courbures suivants deux rayons non coplanaires.

## Claims

1. A tire including a tread having at least one molded channel formed therein, the molded channel being interrupted by at least one furrow of the tread, **characterized in that** the molded channel extends along a curved path and wherein the molded channel presents at least two curvatures about two radii that are not coplanar.

2. A mold for vulcanizing a tire, the mold being of the type comprising:
• a molding member for molding a molded channel in a tire tread; and
• a liner carrying a molding surface for molding a portion of the tire tread, the liner including at least one fillet for molding a furrow in the tread; the fillet including at least one guide channel for guiding the molding member, the guide channel extending through the fillet and wherein the molded channel presents at least two curvatures about two radii that are not coplanar.

3. The mold according to claim 2, wherein the molding member is substantially filamentary in shape and, after being inserted into the guide channel, it extends substantially parallel to a surface of the liner for molding an outside surface of the tread of the tire.

4. The mold according to claim 2 or 3, wherein the molding member is substantially filamentary in shape and, after being inserted in the guide channel, presents at least two curvatures about two radii that are not coplanar.

5. The mold according to any of claims 2 to 4, wherein at least one end of the guide channel is defined by a flared inner edge, preferably without any sharp portions.

6. The mold according to any of claims 2 to 5, wherein the guide channel is formed by an liner arranged in the fillet.

7. The mold according to any of claims 2 to 6, wherein the liner including at least first and second axially spaced-apart fillets, the molding member extends through first and second successive guide channels that are arranged respectively in the first and second fillets common to the molding member.

8. A method of fabricating a so-called final liner having a molding surface for molding a portion of a tire tread, the final liner including at least one molding fillet for molding a furrow in the tread, the method being of the type in which the final liner is molded on a so-called final matrix, the final matrix including at least one so-called final insert for forming a housing in the fillet of the final liner for receiving a member forming a guide channel for guiding a molding member for molding a channel in the tread and wherein the molded channel presents at least two curvatures about two radii that are not coplanar.

9. The method according to claim 8, wherein the final insert is formed by the member forming the guide channel.

10. The method according to claim 8 or 9, wherein prior to molding the final liner on the final matrix, the following steps are performed:
• molding an intermediate liner of shape substantially similar to that of the final liner on an intermediate matrix of shape substantially similar to the final matrix;
• ensuring the intermediate matrix includes at least one intermediate insert for forming a housing in a fillet of the intermediate liner for receiving the final liner; and
• molding the final matrix on the intermediate liner.

11. The method according to claim 10, wherein the intermediate matrix comprises:
• at least one removable block comprising two mutually separable portions, each including a housing for positioning the intermediate insert; and
• a base including at least one housing for positioning the removable block.

12. The method according to claim 10 or 11, wherein at least one substantially transverse cut is made in a fillet of the intermediate liner, preferably a skew cut, said cut terminating in a housing for an intermediate insert so as to enable the final insert to be withdrawn by being moved through the cut.

13. The method according to any of claims 10 to 12, wherein:
• after molding the intermediate liner on the intermediate matrix; and
• before molding the final matrix on the intermediate liner, the intermediate insert is replaced by the final insert.

14. A matrix for molding a liner having at least one molding surface for molding a portion of a tread of a tired, the matrix comprising:
• at least one removable block comprising two mutually separable portions each including a housing for positioning an insert for forming, in the fillet of the liner, a housing for a member for forming a guide channel for a molding member for molding a molded channel in the tread; and
• a base including at least one housing for positioning the removable block and wherein the molded channel presents at least two curvatures about two radii that are not coplanar.

## Patentansprüche

1. Luftreifen (10), der einen Laufstreifen (12) enthält, in dem mindestens ein geformter Kanal (22, 24) ausgespart ist, wobei der geformte Kanal (22, 24) von mindestens einer Rille (20a-d) des Laufstreifens unterbrochen wird, **dadurch gekennzeichnet, dass** der geformte Kanal (22, 24) sich gemäß einer gekrümmten Bahn erstreckt, und dass der geformte Kanal mindestens zwei Krümmungen gemäß zwei nicht koplanaren Radien aufweist.

2. Formwerkzeug (26) zur Vulkanisierung eines Luftreifens (10) von der Art, die enthält:
- ein Element (32, 34) zum Formen eines geformten Kanals (22, 24) in einem Laufstreifen (12) des Luftreifens, und
- eine Auskleidung (28), die eine Fläche (30) zum Formen eines Teils des Laufstreifens des Luftreifens trägt, wobei die Auskleidung mindestens einen Wulst (36a-d) zum Formen einer Rille (20a-d) des Laufstreifens (12) aufweist,
**dadurch gekennzeichnet, dass** der Wulst (36a-d) mindestens einen Führungskanal (36a1-a2, 36b1-b2, 36c1-c2, 36d1-d2) des Formgebungselements (32, 34) aufweist, wobei der Führungskanal sich durch den Wulst (36a-d) hindurch erstreckt, und dass der geformte Kanal mindestens zwei Krümmungen gemäß zwei nicht koplanaren Radien aufweist.

3. Formwerkzeug (26) nach Anspruch 2, bei dem das Formgebungselement (32, 34) im Wesentlichen fadenförmig ist und sich, nachdem es in den Führungskanal (36a1-a2, 36b1-b2, 36c1-c2, 36d1-d2) eingeführt wurde, im Wesentlichen parallel zu einer Fläche (38) der Auskleidung erstreckt, die zum Formen einer Außenfläche (14) des Laufstreifens (12) des Luftreifens (10) bestimmt ist.

4. Formwerkzeug (26) nach Anspruch 2 oder 3, bei dem das Formgebungselement (32, 34) im Wesentlichen fadenförmig ist und, nachdem es in den Führungskanal (36a1-a2, 36b1-b2, 36c1-c2, 36d1-d2) eingeführt wurde, mindestens zwei Krümmungen gemäß zwei nicht koplanaren Radien aufweist.

5. Formwerkzeug (26) nach einem der Ansprüche 2 bis 4, bei dem mindestens ein Ende (42, 44) des Führungskanals von einem erweiterten Innenrand (46, 48) begrenzt wird, der vorzugsweise keine Kante aufweist.

6. Formwerkzeug (26) nach einem der Ansprüche 2 bis 5, bei dem der Führungskanal (36a1-a2, 36b1-b2, 36c1-c2, 36d1-d2) von einem Einsatz (70) geformt wird, der in dem Wulst (36a-d) angeordnet ist.

7. Formwerkzeug (26) nach einem der Ansprüche 2 bis 6, bei dem, wenn die Auskleidung (28) mindestens erste und zweite axial beabstandete Wülste (36a-d) aufweist, das Formgebungselement sich durch erste und zweite, im ersten bzw. zweiten Wulst (36a-d) angeordnete, aufeinanderfolgende Führungskanäle (36a1-a2, 36b1-b2, 36c1-c2, 36d1-d2) erstreckt, die dem Formgebungselement (32, 34) gemeinsam sind.

8. Verfahren zur Herstellung einer so genannten Endauskleidung (28), die eine Formgebungsfläche (30) eines Teils eines Laufstreifens (12) eines Luftreifens trägt, wobei die Endauskleidung (28) mindestens einen Formgebungswulst (36a-d) einer Rille (20a-d) des Laufstreifens aufweist, Verfahren von der Art, bei der die Endauskleidung (28) auf einer so genannten Endmatrize (80) geformt wird, **dadurch gekennzeichnet, dass** die Endmatrize (80) mindestens einen so genannten Endeinsatz (40) enthält, der dazu bestimmt ist, in dem Wulst (20a-d) der Endauskleidung (28) eine Aufnahme (82a1-a2, 82b1-b2, 82c1-c2, 82d1-d2) für ein einen Führungskanal (36a1-a2, 36b1-b2, 36c1-c2, 36d1-d2) eines Formgebungselements (32, 34) eines geformten Kanals (22, 24) im Laufstreifen formendes Element (40) zu formen, und dass der geformte Kanal mindestens zwei Krümmungen gemäß zwei nicht koplanaren Radien aufweist.

9. Verfahren nach Anspruch 8, bei dem der Endeinsatz (40) von dem den Führungskanal (36a1-a2, 36b1-b2, 36c1-c2, 36d1-d2) formenden Element geformt wird.

10. Verfahren nach Anspruch 8 oder 9, bei dem vor dem Formen der Endauskleidung (28) auf der Endmatrize (80):
- eine Zwischenauskleidung (72) einer Form im Wesentlichen gleich der Endauskleidung (28) auf einer Zwischenmatrize (52) einer Form im Wesentlichen gleich der Endmatrize (80) geformt wird,
- wobei die Zwischenmatrize (52) mindestens einen Zwischeneinsatz (70) enthält, der dazu bestimmt ist, in einem Wulst (74a-d) der Zwischenauskleidung (72) eine Aufnahme (76a1-a2, 76b1-b2, 76c1-c2, 76d1-d2) für den Endeinsatz (40) zu formen, und
- die Endmatrize auf der Zwischenauskleidung geformt wird.

11. Verfahren nach Anspruch 10, bei dem die Zwischenmatrize (52) enthält:
- mindestens einen entfernbaren Block (54a-d), der zwei voneinander trennbare Teile (62a-d, 64a-d) enthält, die je eine Aufnahme (66a1-a2, 66b1-b2, 66c1-c2, 66d1-d2) zur Positionierung des Zwischeneinsatzes (70) aufweisen, und
- einen Sockel (56), der mindestens eine Aufnahme (58a-d) zur Positionierung des entfernbaren Blocks (54a-d) aufweist.

12. Verfahren nach Anspruch 10 oder 11, bei dem mindestens ein Ausschnitt (78) im Wesentlichen quer in einem Wulst (74a-d) der Zwischenauskleidung (72) durchgeführt wird, vorzugsweise ein welliger Ausschnitt, wobei dieser Ausschnitt in einer Aufnahme (76a1-a2, 76b1-b2, 76c1-c2, 76d1-d2) eines Zwischeneinsatzes mündet, um die Entnahme des Endeinsatzes (70) durch Verschieben durch den Ausschnitt hindurch zu erlauben.

13. Verfahren nach einem der Ansprüche 10 bis 12, bei dem:
- nach dem Formen der Zwischenauskleidung (72) auf der Zwischenmatrize (52) und
- vor dem Formen der Endmatrize (80) auf der Zwischenauskleidung (72) der Zwischeneinsatz (70) durch den Endeinsatz (40) ersetzt wird.

14. Formgebungsmatrize (52) einer Auskleidung (28), die mindestens eine Formgebungsfläche (30) eines Teils eines Laufstreifens (12) eines Luftreifens (10) trägt, **dadurch gekennzeichnet, dass** die Matrize enthält:
- mindestens einen entfernbaren Block (54a-d), der zwei voneinander trennbare Teile (62a-d, 64a-d) enthält, die je eine Aufnahme (66a1-a2, 66b1-b2, 66c1-c2, 66d1-d2) zur Positionierung eines Einsatzes aufweisen, der dazu bestimmt ist, in dem Wulst der Auskleidung eine Aufnahme für ein Element zu formen, das einen Führungskanal eines Formgebungselements eines geformten Kanals im Laufstreifen formt, und
- einen Sockel (56), der mindestens eine Aufnahme zur Positionierung des entfernbaren Blocks (54a-d) aufweist,
und dass der geformte Kanal mindestens zwei Krümmungen gemäß zwei nicht koplanaren Radien aufweist.
